# EUROPEAN PATENT APPLICATION

(11) **EP 4 303 045 A1**
(43) Date of publication of application: **10.01.2024**
(21) Application number: 23167307.0
(22) Date of filing: 11.04.2023
(51) Int. Cl.: B60H 1/00, G01C 21/34, G08G 1/0967

(54) **VEHICLE CABIN AIR QUALITY MANAGEMENT**

(30) Priority: 05.07.2022 US 202263358279 P
(71) Applicant: AirLib Inc., Scottsdale, AZ 85260 (US)
(72) Inventor: Borrel, Hervé, Scottsdale, Arizona, 85260 (US)
(74) Representative: Bringer IP

(57) **Abstract**

In an embodiment, a vehicle cabin air quality management system and method includes providing a vehicle, a GPS device in the vehicle, an air recirculation flap in the vehicle configured to control admission and recirculation of air into the vehicle, and a module for controlling the air recirculation flap. The method includes providing an Internet-connected server storing an air quality map. The method includes the vehicle moving through locations, each of the locations associated with a respective timestamp, calculating a projected path for the vehicle based on a recent set of the locations, calculating air quality indices along the projected path using the air quality map, calculating a flap position recommendation based on at least a one of the air quality indices, and the module determining a recirculation flap position of the air recirculation flap from at least the flap position recommendation.

## Description

### CROSS-REFERENCE TO RELATED APPLICATIONS

This application claims the benefit of U.S. Provisional Application No. 63/358,279, filed July 5, 2022, which is hereby incorporated by reference in its entirety.

### FIELD

The present specification relates generally to air quality, and more particularly to automotive and other vehicle cabin air quality.

### BACKGROUND

Air quality sensors (AQS) have been used for more than twenty years on high-end automobiles to control the air recirculation flap position. The air recirculation flap can also be called the air intake flap. When closed, no outside air comes in. The air is recirculated. When open, outside air comes into the cabin.

AQS detect variations of pollution in environmental or outside air that is about to enter the cabin. They typically output a flap closure recommendation to a CPU (central processing Unit) of an Air Conditioning (AC) system when the pollution increases significantly. In some cases, the AC CPU uses the raw AQS outputs to calculate the appropriate air recirculation flap position. AQS outputs range from a binary flap position recommendation (open/closed) to raw sensor signals that vary with pollution.

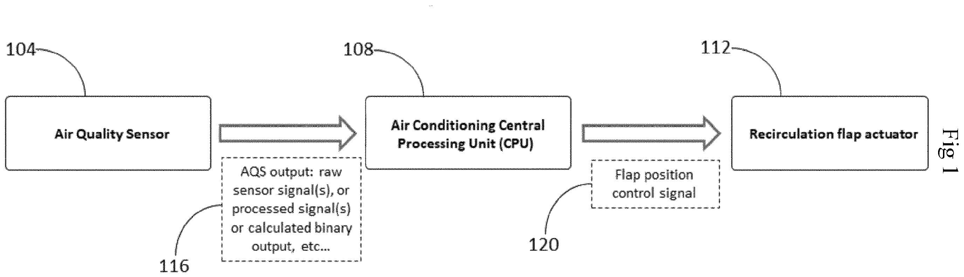

FIG.1 shows how a prior art or traditional AQS 104 outputs information 116 to an air conditioning CPU 108. The CPU outputs control signals 120 to so a recirculation flap actuator 112 can move the recirculation flap to the expected position 112.

Car manufacturers also consider a variety of parameters other than the AQS signal itself, to decide to close the recirculation flap or not. The humidity conditions are, for example, considered to make sure that the recirculation flap closure will not fog the windshield and reduce driver visibility. The number of openings and closings of the recirculation flap is also taken into account and limited. Stepper motors (actuators) that move the recirculation flap are not designed to be activated several times per minute. Car manufacturers typically prefer to limit their use to fewer movements.

Temperature management is also obviously a factor in deciding when the air recirculation flap should be open or closed. In certain conditions, it is much more efficient to keep the recirculation flap closed. That is the case for example if the outside temperature is much higher than the cabin temperature set by the user.

There can be other factors that influence the position of the air recirculation flap. On Electric Vehicles (EVs), conserving electrical energy is a priority, as all energy not spent on vehicle traction reduces the range. A careful thermal management of the cabin is therefore even more important than on gas powered vehicles. To keep air heating and cooling energy to a minimum, car manufacturers tend to minimize the amount of external air brought into the vehicle. In other words, they tend to recirculate the air as much as possible. It is therefore more critical not to let external air in when external pollution is the highest as it would then stay longer in the cabin.

Another parameter that is taken into consideration when automatically managing the air recirculation flap position, is the maximum time the recirculation flap can remain closed before the concentration of CO2 in the cabin exceeds recommended maximum levels. In a typical sedan with four passengers, excessive CO2 levels can be reached in just a few minutes when the air is recirculated. It is well documented that excessive CO2 levels are not only uncomfortable but cause drowsiness, which in turn contributes to accidents.

The air recirculation flap position management strategy is therefore the result of an algorithm taking into account multiple parameters. The ultimate goal is to keep the average cabin pollution as low as possible, while managing the external constraints cited earlier.

This AQS function has been proven to decrease average cabin pollution. It is, however, an expensive feature and so is only implemented on about 10% of all cars made. Moreover, even with top-of-the line AQS, some pollution inevitably enters the vehicle cabin because the recirculation flap can take a few seconds to actuate. An improved AQS system and method is needed.

### SUMMARY

In an embodiment of a vehicle cabin air quality management system and method, an Internet server stores air quality map information for one or several cities in the form of air quality indices (AQI) on a set of grid points over city roadways and for one or more time tranches. There are a plurality of vehicles, often in traffic, and each with an on-board communication unit that allows two way communications with the air quality map server. This may occur, for example, via cellular network and Internet. The on-board communication unit sends at regular intervals (for example, every few seconds) to the air quality map server, the recent vehicle locations obtained from an on-board GPS device along with their timestamps , and requests air quality information in return. The server calculates one or several most likely near future (for example, for the next one, two, or few minutes) paths for the vehicle based on its recent locations. These one or several paths are called projected paths or predicted paths. The server extracts air quality map information over the predicted path and sends this information back to the vehicle communication unit. This information preferably includes a recirculation flap position recommendation. The air quality information or the flap position recommendations are used, typically by the air conditioning CPU, to manage the recirculation flap position in order to minimize pollution in the cabin. This results in improved air quality in the car cabin, with no need for an on-board AQS. On cars with no Internet communication connection capabilities, an in-cabin connected device, such as a smartphone, can be used as the communication unit and gateway to the Internet. In this case, the smartphone becomes a virtual AQS (remote AQS or e-AQS) and overcomes some vehicle limitations by providing air quality improvements that are typically reserved to more expensive cars.

In an embodiment, a vehicle cabin air quality management system and method includes a cloud-based air quality map server, one or more vehicles moving in traffic, a communication unit on-board each vehicle that can access internet while the vehicle is in traffic, a GPS unit on-board each vehicle that generates regular vehicle location information, and a module on-board each vehicle that manages the cabin air intake flap position. The communication unit sends regular vehicle location information, each location being associated with a timestamp, to the air quality map server. The air quality map server calculates one or more most likely near future predicted paths for each vehicle based on the recent vehicle locations received. The air quality map server responds to the communication unit with one or more of the following: 1) air quality map information over the calculated predicted paths; and 2) Recirculation flap position recommendations based on air quality map information over the calculated predicted paths. The flap position recommendations are calculated on-board the vehicle based on air quality map information over the calculated predicted paths if they were not received from the air quality map server. The module that manages the recirculation flap position uses the flap position recommendations as an input to decide on the actual position of the flap at any time, in order to minimize average in-cabin pollution.

In embodiments, the air quality map server responds to the vehicle communication unit with air quality map information over the calculated predicted paths and the communication unit or the air conditioning CPU, or one of the vehicle's other computing units calculates one or more recommended recirculation flap positions based on air quality map information over the calculated predicted paths. The data exchanges between the vehicle and the air quality map server are preferably not executed via the vehicle on-board communication unit but instead via a separate connected device inside the vehicle that accesses internet, typically using a cellular phone network. The connected device inside the vehicle then transfers the received data to the vehicle communication unit for example via Bluetooth. The separate connected device inside the vehicle calculates the recommended recirculation flap positions based on air quality map information over the calculated predicted paths and transfers this recommended recirculation flap position information to the vehicle communication unit. The recommended recirculation flap positions calculated from the air quality map information over the calculated predicted paths are combined with the output signal of an on-board air quality sensor to calculate recirculation flap positions that minimize average in-cabin pollution. The air quality map information over the calculated predicted paths sent to the vehicle communication or to the separate connected device inside the vehicle is used to display air quality information to the car occupants using one of the vehicle's screens or the connected device screen, either in addition to the flap position management activity, or instead of this activity. The flap position recommendations are preferably not used to actuate the recirculation flap automatically but are instead displayed to the car occupants so they can decide when to operate the recirculation flap manually. The communication unit or the connected device inside the vehicle, in addition to performing their regular near real-time communication tasks with the air quality map server, also keep in memory at all times a recent air quality map dataset covering a portion of a city or a whole city or region, so that the required predicted path and flap positions calculations can be performed on-board the vehicle, either by the communication unit or the connected device themselves, or by one of the vehicle's computing units, even if the internet link is interrupted, for example due to a temporary lack of cellular service.

In an embodiment, a vehicle cabin air quality management system and method includes a vehicle in-cabin pollution reduction method including a cloud-based air quality map server, one or more vehicles moving in traffic, a communication unit on-board each vehicle that has no permanent access to internet while in traffic, a GPS unit on-board each vehicle that generates regular vehicle location information, and a module on-board each vehicle that manages the cabin air intake flap position. The vehicle communication unit downloads from time to time air quality map information from the air quality map server, for a city or region, via short range RF communication such as Bluetooth or Wi-Fi or any other means. One of the vehicle computing units uses: 1) regular vehicle location information from the on-board GPS, each location being associated with a timestamp; and 2) the downloaded air quality map information. The one of the vehicle computing units regularly calculates while in traffic one or more most likely near future predicted paths for the vehicle and one or more recommended recirculation flap positions based on air quality map information over the calculated predicted paths. The module that manages the recirculation flap position uses the flap position recommendations as an input to decide on the actual position of the flap at any time, in order to minimize average in-cabin pollution.

In embodiments, the recommended recirculation flap positions calculated from the air quality map information over the calculated predicted paths are combined with the output signal of an on-board air quality sensor to calculate recirculation flap positions that minimize average in-cabin pollution. The air quality map information over the calculated predicted paths is used to display air quality information to the car occupants using one of the vehicle's screens, either in addition to the flap position management activity, or instead of this activity. The communication unit or the connected device or one of the vehicle computing units is also running a navigation app that keeps in memory a planned path for the vehicle. The communication unit or the connected device or one of the vehicle computing units calculating the recommended flap positions, use a portion of the navigation app planned path as the near future predicted path instead of calculating its own predicted path from recent vehicle location information. In embodiments, The vehicle is battery powered and the recirculation flap positions are calculated not only to minimize pollution in the cabin but also to minimize the electrical power consumption allocated to cabin thermal management. In embodiments, the recommended flap positions are not only open or closed but can also be anywhere in between, in other words partially open, to take into account multiple constraints such as in-cabin pollution, cabin thermal management and limits on cabin CO2 concentrations.

In an embodiment, a vehicle cabin air quality management system and method is useful for predicting at any time, near real-time, for a vehicle in traffic, one or more most likely paths for at least the next several tens of seconds, by iteratively finding the next most likely vehicle location or grid point on a roadway map, based on the vehicle recent locations, using a database of previously recorded trips. The iteration may be performed multiple times until the targeted time horizon for the predicted path is reached. The resulting predicted path information may then be used by the driver, the passengers, or automatically by one of the vehicle functional structures or components, in combination with other road information, to take preventive actions, or manage vehicle structures or components, in order to improve comfort or safety, reduce travel time, or minimize gas or electrical power consumption, by anticipating road events, conditions, geography or other parameters.

In an embodiment, a vehicle cabin air quality management system and method includes providing a vehicle, a GPS device in the vehicle, an air recirculation flap in the vehicle configured to control admission and recirculation of air into the vehicle, and a module for controlling the air recirculation flap. The method includes providing an Internet-connected server storing an air quality map. The method includes the vehicle moving through locations, each of the locations associated with a respective timestamp, calculating a projected path for the vehicle based on a recent set of the locations, calculating air quality indices along the projected path using the air quality map, calculating a flap position recommendation based on at least a one of the air quality indices, and the module determining a recirculation flap position of the air recirculation flap from at least the flap position recommendation.

In embodiments, the vehicle includes a CPU, the step of calculating a flap position recommendation based on at least a one of the air quality indices is performed by the CPU. The step of displaying at least one of the following to passengers in the vehicle air quality information based on air quality indices along the projected path, or the flap position recommendation. At least one of the following steps is performed by the server: the step of calculating air quality indices along the projected path using the air quality map; or the step of calculating a flap position recommendation based on at least a one of the air quality indices. The step of calculating a projected path for the vehicle based on a recent set of the locations includes using statistical analysis of previous vehicle paths at some of the locations of the recent set. The vehicle includes a communication unit configured to communicate with the server and with the module for moving the air recirculation flap. An Internet-connected mobile device is on-board the vehicle configured to communicate with the server, and a communication unit for the vehicle is configured to communicate with the connected mobile device and with the module for moving the air recirculation flap. A copy of the air quality map is stored in local data in the vehicle and is accessible by a CPU in the vehicle or in an Internet-connected device carried in the vehicle. The step of calculating air quality indices along the projected path is performed by the CPU in the vehicle or in an Internet-connected device carried in the vehicle. The step of calculating a flap position recommendation is performed by the CPU in the vehicle or in an Internet-connected device carried in the vehicle. The step of the module determining a recirculation flap position from at least the flap position recommendation includes the module determining the recirculation flap position from at least the flap position recommendation and output from an on-board air quality sensor in combination. The step of calculating a projected path for the vehicle based on a recent set of the locations includes using planned route information provided from a navigation system of either the vehicle or an Internet-connected device. In embodiments, the vehicle is an electric vehicle and the recirculation flap position calculations are optimized to keep the flap closed as often as possible in order to minimize the electrical energy spent on heating or cooling the incoming air. In embodiments, the step of calculating a flap position recommendation based on at least a one of the air quality indices yields a flap position recommendation of an open position, a closed position, or any intermediate position therebetween.

In an embodiment, a system and method is for preventative action, managing vehicle components, improving in-cabin comfort, improving vehicle safety, reducing travel time, or minimizing gas or electrical power consumption. The system and method include a vehicle disposed in traffic, and a GPS device in the vehicle, wherein the vehicle has a location on a roadway. A roadway map reflects the roadway and alternative roadways. A processor is in the vehicle, in a device in the vehicle, or in an Internet-connected server. The processor has access to the location and the roadway map. The processor is programmed with specific computer-executable instructions that, when executed, cause the processor to: establish a map location on the roadway map corresponding to the location of the vehicle on the roadway; iteratively determine next most likely vehicle map locations on the roadway map based on a database of previously-recorded trips through the map location; determine a projected path from the next most likely vehicle map locations for a next several tens of seconds; and combine the projected path information with relevant available roadway information on the projected path to recommend an action.

The above provides the reader with a very brief summary of some embodiments described below. Simplifications and omissions are made, and the summary is not intended to limit or define in any way the disclosure. Rather, this brief summary merely introduces the reader to some aspects of some embodiments in preparation for the detailed description that follows.

### BRIEF DESCRIPTION OF THE DRAWINGS

Referring to the drawings:
FIG. 1 is a block diagram illustrating a use of standard prior art AQS on vehicles to recommend air recirculation flap positions based on incoming pollution;
FIG. 2 is a block diagram illustrating an embodiment of a vehicle cabin air quality management system and method, as used in connected vehicles;
FIG. 3 is a block diagram illustrating an embodiment of a vehicle cabin air quality management system and method, as used in non-connected vehicles;
FIG. 4 is a block diagram illustrating operation of an embodiment of an air quality map server in a vehicle cabin air quality management system and method;
FIG. 5 is a generalized schematic illustrating an area for possible projected paths of a vehicle in an embodiment of a vehicle cabin air quality management system and method; and
FIG. 6 is a generalized schematic illustrating possible projected paths of a vehicle in an embodiment of a vehicle cabin air quality management system and method.

### DETAILED DESCRIPTION

Reference now is made to the drawings, in which the same reference characters are used throughout the different figures to designate the same elements. Briefly, the embodiments presented herein are preferred exemplary embodiments and are not intended to limit the scope, applicability, or configuration of all possible embodiments, but rather to provide an enabling description for all possible embodiments within the scope and spirit of the specification. Description of these preferred embodiments is generally made with the use of verbs such as "is" and "are" rather than "may," "could," "includes," "comprises," and the like, because the description is made with reference to the drawings presented. One having ordinary skill in the art will understand that changes may be made in the structure, arrangement, number, and function of elements and features without departing from the scope and spirit of the specification. Further, the description may omit certain information which is readily known to one having ordinary skill in the art to prevent crowding the description with detail which is not necessary for enablement. Indeed, the diction used herein is meant to be readable and informational rather than to delineate and limit the specification; therefore, the scope and spirit of the specification should not be limited by the following description and its language choices.

An embodiment of a vehicle cabin air quality management system and method includes a vehicle, a GPS device in the vehicle, an air recirculation flap in the vehicle which is configured to control admission and recirculation of environmental air into the vehicle, and a module for controlling the air recirculation flap. In this description, the word "vehicle" is frequently used, and the word "car" is sometimes used. Because most readers have been passengers in cars, that word is useful for accessibility and understandability. However, the word vehicle illustrates that the description herein is not limited to cars and can indeed be used in other vehicles, such as buses, wagons, trains, trams, boats, watercraft, planes, aircraft, and other vehicles useful for moving passengers through areas both with and without air pollution. In such vehicles, an air recirculation flap opens, closes, or partially opens to admit or prevent admission of environmental air into the cabin or interior of the vehicle, where the passengers breathe the air. The system and method described herein assist in control of the operation of the air recirculation flap based on the quality of the environmental air, as determined at least in part on air quality map(s) corresponding to the vehicle's surroundings and the vehicle's projected path through those surroundings.

The system and method described herein enables the control of the air recirculation flap based on air quality map server information, on any vehicle, in or out of traffic, to improve in-cabin air quality. This specification describes a system method to transmit to such vehicles regular air quality information relevant to their predicted path.

In some embodiments, the air quality map is stored on board the vehicle, such as in local data storage. In other embodiments, the air quality map is stored on a server accessible through an Internet connection. In some cases, the vehicle has an Internet connection and communicates directly with the server, while in other cases, a separate device in or on the vehicle, such as a mobile phone, has an Internet connection and communicates with the server and then also with the vehicle, such as through a wired or wireless connection.

In one of the embodiments, one or more vehicles in traffic have permanent Internet connection capabilities within an on-board communication unit. These vehicles are identified herein as "connected vehicles" or "connected cars". The communication unit is sometimes referred to herein as the "infotainment system" on a vehicle, and connect the vehicle in direct data communication with the Internet. Additionally, most recent cars have an infotainment system with at least some RF communication capabilities with devices such as smartphones that are so often carried inside the cabin, so that the infotainment system is also in direct data communication with such devices. The most common short range RF communication system is Bluetooth. Not all infotainment systems have permanent Internet connection capabilities, either because they do not have the required hardware or because the communication service or subscription is not activated.

A connected vehicle typically relies on the cellular communication network to access the Internet. Other RF means could however be used, such as LoRa, Wi-Fi or others.

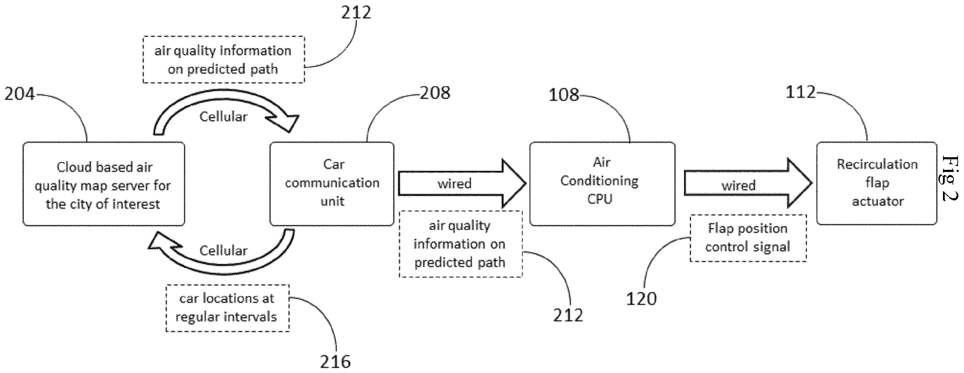

It is also assumed that such connected vehicles have an on-board GPS device that can provide regular location information in the form of a latitude and a longitude with an accuracy of at least a few meters to a few tens of meters, and an associated timestamp (the exact time at which the GPS device recorded the location). Fig. 2 illustrates how the communication unit 208 of a connected car sends location information, as determined by the GPS device, at regular intervals 216 to an Internet cloud-based air quality map server 204. The server 204 is preferably a specially-programmed computer or plurality of computers having at least a processor or central processing unit ("CPU"), non-transitory memory such as RAM and hard drive memory, hardware such as a network interface card and other cards connected to input and output ports, and software specially-programmed to host the system and process and respond to requests.

Briefly, the air quality maps stored on the server 204 provide an air quality index (AQI), or a plurality of air quality indices (also, AQI), for each location on a dense grid over city roadways, and do so for defined time tranches or timestamps. An AQI can represent a pollution level for a single pollutant, such as NO2, CO or PM1 (Particulate matters below 1 micron in size), a family of pollutant, such as VOCs (Volatile Organic compounds such as formaldehyde, benzene, toluene etc....), or can even be the result of a calculation based on several AQIs and other parameters. The grid pitch of an air quality map is typically of the order of a few tens of meters. Some air quality maps are continuous instead being made of grid points. In such cases, AQIs can be allocated to any location on the map. The time tranches are typically of the order of a few minutes, but are reduced to less than a minute once enough air quality data has been collected for a given city. The system and method described herein primarily discusses air quality maps made of grid points and time tranches as a non-limiting example. However, the scope of the disclosure nevertheless is applicable for geographically continuous maps, which can be viewed as containing an infinity of grid points. Similarly, the scope is applicable with maps carrying information for any specific time rather than finite time tranches.

Preferably, real-time air quality maps are calculated with very recent air quality information, for example. not older than of a few seconds to a few minutes. These require constant air quality monitoring and are therefore not easy to obtain. Statistical air quality maps are built with information that can be older but that is still statistically relevant to a certain location and time of day. Such maps indicate the likely pollution in an area of interest at a particular time of day. These carry less information about real-time pollution. Their value and accuracy rely on pollution patterns, that is, the repetition of similar pollution in an area, at a statistically equivalent time of day, and in similar climatic conditions. The scope of this specification includes both real-time and statistical air quality maps.

Returning to FIG. 2, the communication unit 208 in a connected car sends location information at regular intervals 216 to the cloud-based air quality map server 204. Those intervals do not have to be exactly constant: in some embodiments the intervals are fixed and in others they are variable. One preferred, but not necessary, time interval between two locations is a few seconds in order for the method to function properly. In some embodiments, a timestamp is sent with each location to identify the exact time the vehicle was at that location. The communication unit 208 records the locations with the chosen interval and sends them to the server 204 less often, in a packet or group of several locations. This is done to reduce the number of messages sent via Internet and therefore the cost of communication.

The constraints on time intervals are given on one hand by the need to track the vehicle closely enough to be able to predict where it is likely to be in the near future, and on the other hand by the need to control the air recirculation flap fast and early enough to block incoming pollution out of the cabin. Time intervals of two to five seconds between location recording, and two to five seconds between messages sent to the server, are examples of appropriate ranges.

The communication unit 208 therefore has to be able to access and record location information, for example, as latitude and longitude, and their timestamp, from an on-board location device such as a GPS device. The latitude and longitude have to be accurate enough for the server 204 to be able to identify what map grid points the car is close to.

The granularity of the map, that is, the average distance between grid points, can vary, but is preferably between ten meters and one hundred meters for the map to be considered hyperlocal and to adequately represent pollution variations along roadways.

As shown in Fig. 2 the server 204 receives regular car location data from the vehicle and promptly replies with air quality information for locations along a predicted or projected path for the specific car. The server has to be able to handle a multitude of car requests arriving at the same time or very close times. The method is designed to work with millions of cars in traffic. Several servers can be needed as the number of cars participating in the system increases.

In the embodiment shown on Fig. 2 the air quality information on predicted path 212 is sent to communication unit 208. As an aside, the terms "predicted path" and "projected path" are used interchangeably and without distinction. This air quality information 212 is then sent to the air conditioning unit CPU 108. The air conditioning CPU is in this case part of what can be referred to more generally as the module that manages the cabin air recirculation flap position. In some embodiments, the AC CPU is the module, while in other embodiments it may include additional components, and in still other embodiments it has another structure configured to control the air recirculation flap position. The air conditioning CPU 108 may output flap position control signals 120 that one or more recirculation flap actuators 112 use to move the recirculation flap.

Fig. 2 exemplifies one embodiment with a specific flow of information and a specific partitioning of the vehicle structures, features, and functions. Fig. 2 does not specify where the calculation of the air recirculation flap position recommendations from the air quality map information over the predicted path is done.

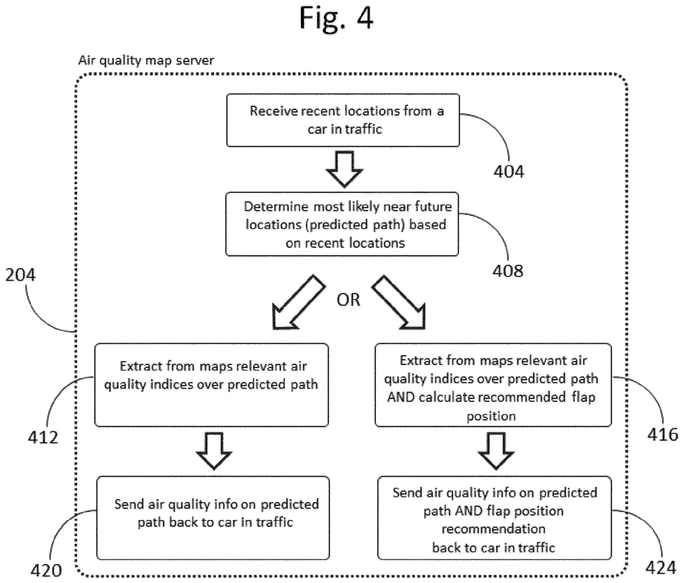

Fig 4. describes the main operations the air quality map server 204 executes. The first step 404 of a request/response cycle is receiving a set of locations from a vehicle. With this information, the server 204 calculates a one or more most likely near future predicted path as shown at step 408, for example by also using statistics on previously recorded vehicle paths. This is preferably done based on the recent location(s) of the vehicle as transmitted to the server.

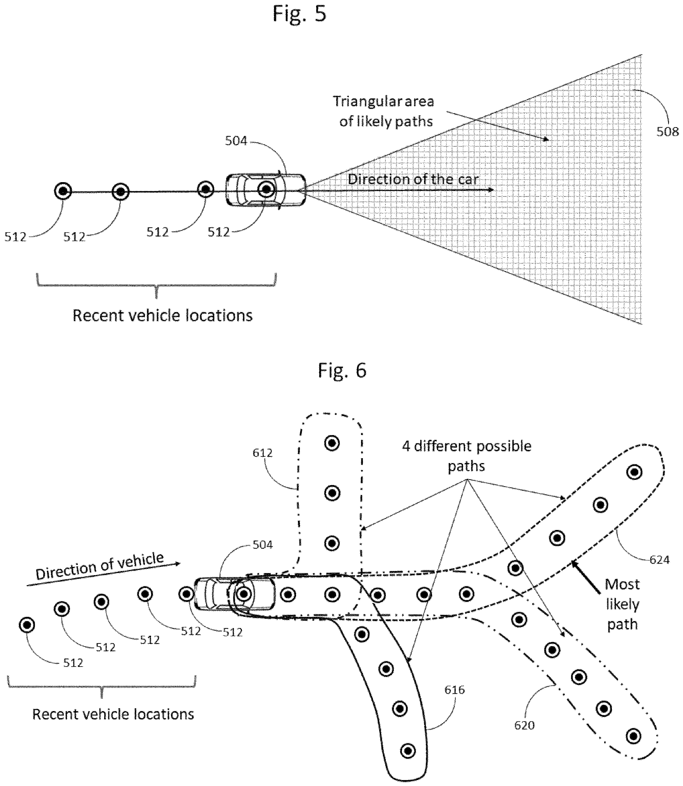

Step 408 may start with matching the recent car locations received to map grid points. Fig.5 and Fig.6 show recent map grid points 512 matched to a car recent locations. Once the recent map grid points 512 hit by the car are known, several methods can be used to identify one or more predicted paths.

Fig.5 illustrates a geometrical method where the likely near future paths are assumed to be statistically contained in a triangle 508 centered on the current direction of the car 504. The length and width of the triangle depends on the car speed and on the expected accuracy of the estimation.

Fig. 6 illustrates a more elaborate method where several specific near future paths 612, 616, 620, and 624 are identified. A probability is associated to each possible path based on historical path data collected. The method can then yield a single most likely path 624 or several most likely paths.

A possible or projected path is calculated by iteratively identifying the most likely "next" location of a vehicle based on its recent locations, using a database of trips, for example the trips used to collect air quality information in this city. The iterative process can be repeated a number of time to obtain a predicted path with the desired estimated duration. As shown on Fig.6, the likely paths consist in sequences of map grid points.

Once the predicted paths grid points are selected, step 412 of Fig. 4 can be executed. One or several AQIs can be used for each grid point. At step 412, the right map data must be chosen. It may be data from a real-time map, but it may also be data from statistical maps. In the latter case, a time tranche (fixed period of time with a duration of a few seconds to several minutes or tens of minutes) matching the current time may be chosen. The type of day (weekdays versus weekends versus holidays), the climatic conditions and the seasonality may be taken into account to choose the most appropriate map data.

Once the AQIs have been selected for each grid point on the predicted paths, this information can be sent back to the car, step 420, as a response. The car may, for example, receive a list of grid points (latitude/longitude) with their associated AQIs drawn from the air quality map(s) over the predicted path. In this case, the car must have the capability to use the data to calculate a desired air recirculation flap position.

Alternatively, instead of executing step 412, the server executes step 416 which includes the calculation of a recommended recirculation flap position. It includes several recommendations for recirculation flap positions over a near future period, of for example one minute.

Whether the air recirculation flap position calculation is done by the server 204 or by the vehicle itself, within the communication unit 208 or by the AC CPU 108, the following main principles are applicable:
- An air recirculation flap may be closed if high pollution, or higher pollution, is expected in the near future on the predicted path. Some thresholds or rates of changes may be applicable. The forward AQIs may also be compared to the recent past AQIs to make the decision.
- An air recirculation flap may be re-opened if there is no significant pollution ahead or if this pollution is lower than the recent past pollution.

The forward-looking component described herein allows a statistically more efficient management of the air recirculation flap than other flap management algorithms. For example, the recirculation flap can be kept closed over an entire area of high pollution instead of being re-opened inadequately and unnecessarily in the middle of it due to a temporary drop in AQS signal. This is valuable to car manufacturers as it contributes to a better average air quality in car cabins and therefore to end customer health and satisfaction.

The number of recirculation flap movements can also be reduced by looking ahead instead of reacting to every variation of the AQS signal. This eases some of the technical constraints on recirculation flap actuators, such as stepper motors.

In some embodiments, the method described herein, however, only identifies statistically likely pollution and misses some pollution events that are unusual or not well correlated to the air quality map used. For example, a highly polluting motorbike going by a quiet road at night will generate local pollution that an on-board AQS would detect, but that will not be reflected on a statistical air quality map.

The method is therefore not always superior to the use of an on-board AQS, but it is on average superior. Independently of the relative performance of the method, the system and method described herein improves in cabin air quality on any car with no on-board AQS, without hardware cost.

The air recirculation flap position recommendations may include an immediate recommendation as well as a set of recommendations spread over the coming minute or few minutes, depending on the profile of the pollution over the near future predicted path. These near future recommendations may be applied or may be changed later when new recommendations are calculated.

The parameters of the recirculation flap position calculation algorithm are preferably tuned depending on the specific car manufacturer or customer requirements. For example, a given car manufacturer may target a higher average closed flap time than another manufacturer.

Other constraints are considered when calculating the recommended air recirculation flap position. For example, a maximum continuously closed recirculation flap time may be applied to ensure that the CO2 level inside the car does not reach excessive levels.

Another vehicle manufacturer may want to limit the number of recirculation flap movements to a certain average number per hour, in which case the conditions for air recirculation flap position changes are toughened in the algorithm.

If the server calculates the air recirculation flap position or positions at step 416, it sends this information to the vehicle at step 424 either along additional air quality data, or even by itself.

The contents of the responses to the vehicles may be customized to a car manufacturer or car model or car platform or any other group of cars. For example, a group of cars might request a simple binary open/close recirculation flap response, while another might request a broader set of data, for example if some air quality information is intended to be displayed to the car passengers.

The server responses to vehicles are preferably sent within a second of receiving the request, so that the recommendation is applicable near real-time to the current location of the vehicle.

AQIs on less likely paths than the most likely path are preferably used with a lesser weight in the recirculation flap position calculation, or in some cases are not used at all.

The car communication unit 208 transfers or transmit the air quality information on predicted path 212 to the module that manages the cabin air recirculation flap position, for example the AC CPU 108. The communication path between the communication unit 208 and the and the AC CPU 108 may be implemented in different ways on different vehicles. On some vehicles, the air recirculation flap is driven by another vehicle structure or component other than the AC CPU 108.

In another embodiment, the vehicle is not connected and therefore does not have its own permanent Internet connection capability. It may still have a short-range RF connection capability, such as Bluetooth, within its communication unit. In this embodiment, a connected device, such as a smartphone, inside the vehicle, may act as the permanent Internet connection. The connected device may run an executable program, such as a dedicated Air Quality APP, to fulfill its tasks within the method.

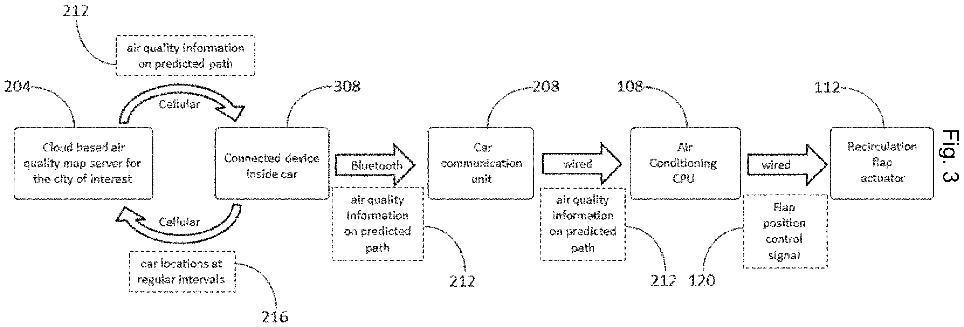

FIG. 3 describes the flow of data in this non connected vehicle embodiment. The connected device 308 sends the regular location information 216 to a server 204 and gets responses including air quality information on predicted path 212.

The connected device 308 preferably has short range RF communication capabilities such as Bluetooth, to communicate with the vehicle communication unit 208. Using this RF capability, the connected device 308 sends the air quality information on the predicted path 212 to the vehicle communication unit 208.

Similarly to the previous embodiment, the smartphone or other connected device may receive from the server 204 responses which also include recirculation flap position recommendations. Alternatively, the executable program on the connected device may calculate the recirculation flap position recommendations based on the air quality information received, if the connected device did not receive flap position recommendations from the server. The recirculation flap position recommendations may also be calculated either by the communication unit 208 or by the AC CPU 108.

The connected device either has its own GPS capability or can obtain GPS location information from the car via the communication unit.

The connected device is preferably the car owner's smartphone, or a usual driver's or passenger's smartphone. That device may be set up to automatically connect to the vehicle communication unit via Bluetooth using software like Android auto, Android automotive, Apple car play, or any other software feature or software platform that allows the flow of data from a device to a car communication unit. The communication may also be achieved using another RF technology, infra-red technology, or even a cable or another hardware connection.

The non-connected car embodiment brings better in-cabin air quality to vehicles with no permanent Internet link and no on-board AQS. These vehicles still represent a vast majority of total vehicle sales today.

In another embodiment, the system and method is used on a vehicle with an on-board AQS. In this case, the recirculation flap recommendation algorithm combines both the data or output from the on-board AQS and the calculated air quality information on the predicted path or even the calculated recirculation flap recommendation. A decision to close the air recirculation flap is based on either of these two inputs recommending the closure, while a decision to reopen may require that both inputs agree on the reopening. Using this combination of real-time AQS output and air quality map data, the best in-cabin air quality can be achieved. The method therefore also benefits vehicles equipped with an on-board AQS.

In another embodiment, the vehicle main structure and components are not organized as previously described with an infotainment system and an AC CPU, but in a different manner. Regardless of how the car software architecture is designed, the in-cabin connected device communicates with the vehicle and the relevant air quality information or air recirculation flap position information is routed to the car structure or component that controls the air recirculation flap.

In a typical embodiment, a connected device running the in-cabin air quality application detects when it is inside a vehicle with map-based recirculation flap control capabilities, for example via Bluetooth, and begins sending location(s) information and requesting regular air quality information.

In another embodiment, a vehicle with no permanent Internet connection loads air quality map information directly without the need for an in-cabin connected device, preferably by connecting to a local Wi-Fi within range when available, or even by connecting to other types of local fixed or roadside wireless networks when available. The vehicle would therefore preferably only use free or low-cost data instead of relying on a permanent Internet connection. In this embodiment the vehicle may have to load enough air quality data to be self-sufficient for prolonged periods of times, potentially hours, since it may not be able to get real-time response from an air quality server by lack of means to communicate with it. In particular, it may have to load enough information to be able to calculate predicted paths (408 in FIG. 4) over large areas of the city where it may travel, extract from maps the relevant air quality indices over the predicted paths (412 in FIG. 4), and calculate the recommended air recirculation flap positions (416 in FIG. 4).

A city of several million inhabitants with an area of several hundreds of square kilometers will likely have air quality maps made of around fifty thousand grid points. Assuming three hundred time tranches are used, the total map data for a city may be under two hundred megabytes, including some data used specifically for calculating the predictive paths. This is a volume of data compatible with a daily or weekly download to a vehicle from a fixed RF network access such as Wi-Fi network.

The system and method may therefore be implemented on non-connected vehicles without the need for an in-cabin connected device. The air quality information will not be as up-to-date as with previously disclosed embodiments featuring real-time communication, and the car may get out of the area covered by the map, but in most cases a basic map based air recirculation flap control method may still be implemented with great efficacy.

In an embodiment with a non-connected vehicle relying on an in-cabin connected device for access to the air quality map server, the frequency and size of the exchanges between the connected device and the air quality server often varies. Requests and responses may occur every few seconds as previously described, but the intervals between messages could also be extended to save on data cost or to satisfy other technical constraints. As the time interval between messages to and from the air quality server increases, the volume of data exchanged per message preferably increases to ensure the connected device or the vehicle has enough data to cover any possible location it might travel to during this interval. The predicted path calculation has to remain feasible, either by the connected device or by one of the vehicle's CPUs. In other words, the radius of area the air quality data should cover increases as the time interval between data exchange with the server increases. The interval may be increased to a minute or even 15 minutes or more. Above a certain time interval between messages, the server may consider that the vehicle may travel to any place in the city before a new message is sent, and the air quality data transfer may therefore cover the whole city in this case.

As a vehicle exits a given city or region, the server automatically switches to another set of maps to keep on providing the relevant information to the vehicle.

In another embodiment, the connected device, for example a smartphone, actually guides the driver of the car using a navigation app. In this case, the air quality app uses a portion of the planned path from the navigation app instead of calculating a predicted path. It does not need in this case to consider a wider area that includes other path possibilities. The predicted path is therefore the near future portion of the planned navigation path. This interaction between a navigation app and the air quality app improves the performance of the in-cabin pollution reduction algorithm. It may also be the vehicle communication unit or another structure or component of the vehicle that is running the navigation software and may therefore provide the planned path information.

In another embodiment, a temporary loss of connected device connectivity, such as an interruption in cellular service, can be circumvented with regular air quality map downloads for wide areas of a city around the recent car locations, or even for the whole city. These downloads are preferably executed on a regular basis, every 5 minutes, hourly, daily, weekly, or whenever a WIFI network is available, to create an on-board air quality information back-up that is usable while the vehicle is in use. The regular downloads cover connectivity interruptions of a few minutes. Or the regular downloads could be for the whole city and would therefore cover longer connectivity interruptions if the vehicle stays within the city limits. The connected device or another computing unit on-board is then be able to perform all required calculations autonomously without regular access to an air quality map server. Such back-up versions of the air quality maps are most probably not as statistically representative as an up-to-date version supplied near real-time by a server, but are sufficient to achieve a significant in-cabin air quality improvement.

In another embodiment, the map-based air recirculation flap management function described above is used on an electrical vehicle (EV). The specific embodiment may be a connected vehicle or a non-connected vehicle with an in-cabin connected device, or even one of the other cases described above. The method applied to an EV may be adapted to maximize the times the recirculation flap is closed. The goal of such a maximum flap closed time is to reduce the electrical power consumption required to heat up or cool down the incoming air, in order to maximize the range of the vehicle battery. The recirculation flap algorithm parameters are, for that purpose, tuned to close for longer periods or based on lower near future AQI or AQI rates of increase thresholds. The air recirculation flap re-opening decision is preferably toughened to ensure that the recirculation flap is only open when the external pollution is low. Other factors like potentially excessive CO2 concentrations, or the risk of fogging the windshield, may remain applicable. In this embodiment the purpose of the method is not only to reduce pollution in the cabin but also to reduce the electrical power consumption allocated to cabin thermal management.

In another embodiment of the method, some or all of the air quality information obtained from the server is used to display information to the car driver and passengers. The information to be displayed includes a pollution profile over the predicted path, air quality information over a wider area, the air recirculation flap recommendations themselves (so that passengers of the vehicle can decide whether or when to manually operate the recirculation flap). The display may use one of the vehicle's screens or a connected device screen. The information displayed may also include in-cabin exposure trends over days, weeks or longer periods, or external pollution trends over days, weeks or longer periods. This user information feature can be implemented in addition to the recirculation flap management feature or it can be done as a stand-alone feature. Based on the information displayed, users may simply learn about pollution profiles or trends, but they may also take decisions such as changing their usual routes or times of travel, manually operating the recirculation flap at times they deem appropriate, or any other decision that may reduce their exposure to pollution.

The air recirculation flap can be closed to keep external pollution out of the vehicle, or it can be opened to let fresh air into the cabin. It can also be partially opened, in which case some fresh air comes in and part of the cabin air is recirculated. Such intermediate positions can have some advantages when managing several opposite constraints. For example, high AQI over the predicted path may lead to a recommended closed air recirculation flap, while at the same time a potentially excessive CO2 concentration in the cabin may recommend an open air recirculation flap. In this case, the best solution may be to partially open the air recirculation flap. Similarly, a large difference between the current cabin temperature and the desired cabin temperature may require a closed air recirculation flap, while an excessive in-cabin CO2 concentration may require an open air recirculation flap. Some publications (such as JUNG, et al., Simultaneously Reducing CO2 And Particulate Exposures Via Fractional Recirculation Of Vehicle Cabin Air, article in Atmos Environ, July 2017, pages 77-88, Vol. 160) on partial recirculation point to advantages and positive results that can be obtained in terms of resulting in-cabin air quality. Another way of controlling pollution entering a vehicle cabin is to vary the cabin air blower speed (sometimes called fan speed). In cases where the recirculation flap needs to remain open, or partially open, while the vehicle is going through a high pollution area, reducing automatically the blower speed will contribute to minimizing in-cabin pollution. In a similar way, the blower fan speed could be increased when the cabin air is more polluted or closer to the CO2 limit, while the vehicle is in a clean air area. Such automated blower speed control can be used by itself or in addition to the automated air recirculation flap control. It can make use of the projected path information in a similar manner as other embodiments describe it for the recirculation flap position.

Information on the near future vehicle path is useful to anticipate roadway pollution and improve in-cabin air quality. Similarly, the near future vehicle path can be useful for other purposes such as anticipating: red lights, vehicle crashes ahead, road hazards and obstacles, traffic slowing down or traffic jams, steep road inclines, poor road conditions etc. Using a calculated predicted path based on recent locations, either with an on-board computing unit or with an in-cabin connected device, in conjunction with other road information that may be made available to the vehicle (for example via map information transmitted near real-time to the vehicle), may contribute to improving on-board comfort and safety, reducing travel time, or minimizing gas or electrical power consumption. For those purposes the near future predicted path preferably, but not necessarily, covers a period of several tens of seconds to several minutes. It is therefore different in nature from the very short term predicted paths, calculated for the next second or few seconds, that are typically used for autonomous vehicles and vehicle safety (for example, obstacle detection).

A preferred embodiment is fully and clearly described above so as to enable one having skill in the art to understand, make, and use the same. Those skilled in the art will recognize that modifications may be made to the description above without departing from the spirit of the specification, and that some embodiments include only those elements and features described, or a subset thereof. To the extent that modifications do not depart from the spirit of the specification, they are intended to be included within the scope thereof.

## Claims

1. A method of reducing in-cabin air pollution in a vehicle, comprising:
providing a vehicle, a GPS device in the vehicle, an air recirculation flap in the vehicle configured to control admission and recirculation of air into the vehicle, and a module for controlling the air recirculation flap;
providing an Internet-connected server storing an air quality map;
the vehicle moving through locations, each of the locations associated with a respective timestamp;
calculating a projected path for the vehicle based on a recent set of the locations;
calculating air quality indices along the projected path using the air quality map;
calculating a flap position recommendation based on at least a one of the air quality indices; and
the module determining a recirculation flap position of the air recirculation flap from at least the flap position recommendation.

2. The method of claim 1, wherein:
the vehicle includes a CPU; and
the step of calculating a flap position recommendation based on at least a one of the air quality indices is performed by the CPU.

3. The method of claim 1, further comprising the step of displaying at least one of the following to passengers in the vehicle:
air quality information based on air quality indices along the projected path; or
the flap position recommendation.

4. The method of claim 1, wherein at least one of the following steps is performed by the server:
the step of calculating air quality indices along the projected path using the air quality map; or
the step of calculating a flap position recommendation based on at least a one of the air quality indices.

5. The method of claim 1, wherein the step of calculating a projected path for the vehicle based on a recent set of the locations includes using statistical analysis of previous vehicle paths at some of the locations of the recent set.

6. The method of claim 1, further comprising a communication unit for the vehicle, wherein the communication unit is configured to communicate with the server and with the module for moving the air recirculation flap.

7. The method of claim 1, further comprising:
an Internet-connected mobile device on-board the vehicle configured to communicate with the server; and
a communication unit for the vehicle configured to communicate with the Internet-connected mobile device and with the module for moving the air recirculation flap.

8. The method of claim 1, wherein a copy of the air quality map is stored in local data in the vehicle and is accessible by a CPU in the vehicle or in an Internet-connected device carried in the vehicle.

9. The method of claim 8 wherein the step of calculating air quality indices along the projected path is performed by the CPU in the vehicle or in an Internet-connected device carried in the vehicle.

10. The method of claim 8, wherein the step of calculating a flap position recommendation is performed by the CPU in the vehicle or in an Internet-connected device carried in the vehicle.

11. The method of claim 1, wherein the step of the module determining a recirculation flap position from at least the flap position recommendation includes the module determining the recirculation flap position from at least the flap position recommendation and output from an on-board air quality sensor in combination.

12. The method of claim 1, wherein the step of calculating a projected path for the vehicle based on a recent set of the locations includes using planned route information provided from a navigation system of either the vehicle or an Internet-connected device.

13. The method of claim 1 wherein the vehicle is an electric vehicle and the recirculation flap position calculations are optimized to keep the flap closed as often as possible in order to minimize electrical energy spent on heating or cooling air coming into the vehicle.

14. The method of claim 1, wherein the step of calculating a flap position recommendation based on at least a one of the air quality indices yields a flap position recommendation of an open position, a closed position, or any intermediate position therebetween.

15. A system for taking preventative action, managing vehicle components, improving in-cabin comfort, improving vehicle safety, reducing travel time, or minimizing gas or electrical power consumption, the system comprising:
a vehicle disposed in traffic, and a GPS device in the vehicle,
the vehicle having a location on a roadway;
a roadway map reflecting the roadway and alternative roadways;
a processor in the vehicle, in a device in the vehicle, or in an Internet-connected server, the processor having access to the location and the roadway map;
the processor programmed with specific computer-executable instructions that, when executed, cause the processor to:
establish a map location on the roadway map corresponding to the location of the vehicle on the roadway;
iteratively determine next most likely vehicle map locations on the roadway map based on a database of previously-recorded trips through the map location;
determine a projected path from the next most likely vehicle map locations for a next several tens of seconds; and
combine the projected path information with relevant available roadway information on the projected path to recommend an action.
